# EUROPEAN PATENT APPLICATION

(11) **EP 3 594 965 A1**
(43) Date of publication of application: **15.01.2020**
(21) Application number: 17899770.6
(22) Date of filing: 08.03.2017
(51) Int. Cl.: G21F 5/08

(54) **IMPACT LIMITER FOR CONTAINERS FOR TRANSPORTING SPENT NUCLEAR FUEL**

(71) Applicant: Equipos Nucleares, S.A., 39600 Maliaño-Cantabria (ES)
(72) Inventor: ALVAREZ-MIRANDA MORÁN, Alfonso, 39600 Maliaño, Cantabria (ES); GARRIDO QUEVEDO, David, 39600 Maliaño, Cantabria (ES)
(74) Representative: Urizar Anasagasti, Jesus Maria
(86) International application number: PCT/ES2017/070131
(87) International publication number: WO 2018/162768

(57) **Abstract**

The invention relates to an impact limiter for containers for transporting spent nuclear fuel, formed by respective cylindrical elements (1, 2) placed at each end of a container (3), each cylinder including: a first vasiform area delimited by a collar (14), which surrounds the corresponding base of the container (3) and around which is provided a honeycomb structural protection (18) that projects slightly from the edge of the container (3); and a second area of a polyurethane filling (17), which projects axially from the corresponding base of the container (3), both areas being packaged by a rigid outer cover (13). Both limiters have an axial hole (20) inside of which is disposed a disc (15) parallel to and separated from the vasiform collar (14) by a series of separator tubes (16) by means of which the disc is fixed by threaded bolts to a cover (4) or bottom (5) of the container (3).

## Description

### Object of the invention

The present invention relates to an impact limiter for containers intended to transport spent nuclear fuel during the transport of said container out of nuclear facilities to a centralised temporary storage facility or any other authorised destination.

### Background of the invention

After being irradiated in nuclear reactors, nuclear fuel is stored in the pools of nuclear power plants while it decays and cools. Subsequently, spent nuclear fuel can be stored dry until it is finally disposed of in storage containers or storage and transport containers, the latter of which are known as dual-purpose containers. At present, high-level waste is not transported in Spain, since said waste remains in the pools or in containers at the plants. However, given the creation of a Centralised Temporary Storage facility, there is a need to use suitable, dual-purpose containers to also minimise or eliminate the risks associated with the transfer of this type of waste when transported from nuclear power plants to the new facility.

Metal dual-purpose containers are generally containers that comprise a cylindrical vessel with a leaktight closure system having walls of considerable thickness, about 40 cm, which is covered by a neutron shielding in order to provide shielding for the radiation generated inside, achieved by a more external moderator or poison layer. The central cavity of the container houses a stainless steel and aluminium basket containing a certain number of spent fuel elements. The sealing of the container is achieved by a double cover, the innermost of which is made of steel and has containment and shielding functions, while the outer cover, also made of steel, maintains the structural integrity in the case of impacts as a consequence of potential accidents.

Transport outside the power plant or storage facility requires, in addition to ensuring the tightness of the container to prevent leakage of radioactive material, protecting the container against potential accident impacts by preventing the vehicle transporting the container from crashing or the container from falling out of the vehicle during transport. For this purpose, impact limiters have been designed, which include round cylindrical elements placed on each end of the container. Each impact limiter includes an annular area that encases a portion of each one of the ends of the container. Such impact limiters include a foam, wood, or honeycomb material sandwiched between a rigid inner shell and a rigid outer shell. The combination of wood that is normally used consists of red wood (*Sequoya Samperviverens*) and balsa wood (*Ochroma Pyramidale*), which provide an expensive design that is not environmentally friendly. In addition, its behaviour is very sensitive to variations in design temperatures within the range required by applicable regulations.

It is a well-known fact that the edges of prismatic or cylindrical elements, in the event of a fall, collision or overturn, usually suffer damage. In the case of a cylindrical container, these damages concentrate on the edges of the bases, due to which these areas should be especially protected.

Document WO 95/10839 describes a device that includes two impact limiters 22 and 23 coupled to the bases of the container, having noncircular outer peripheries, preferably octagonal. Each of these elements is formed by a first filling of a honeycomb material with cross-laminated corrugations which is used as impact-absorbing material 72 on the peripheral surface that laterally encases the container, included in an annular body 28, which interiorly defines an opening 44 that fits into the base of the container and externally exhibits an octagonal prismatic configuration. Axially it has a tapered cap 30 protruding from the annular body 28, which has a frusto-pyramidal configuration and whose outer face is defined by an outer layer that protects an impact-absorbing material 74, formed by a polyurethane foam.

The impact limiters of WO 95/10839 are attached to the container through a series of bolts 56 that are housed in conduits 62 that longitudinally pass through the body of the limiter 22, 23 to reach the container. These bolts dynamically become part of the body of the impact limiter, with which, in the case of a lateral impact on the limiter, it behaves as a block and therefore the bolts 56 experience said impact in equal measure. Consequently, the fixing bolts can break and the limiter can detach after the first impact. This could have serious consequences for the container if its unprotected base receives a second impact.

Since the impact limiters must accompany the transport container over public thoroughfares, the space available for the impact limiters to pass through tunnels, bridges, and other highway, waterway, and railway features limits the overall size of impact limiters. This limitation should not result in a loss of adequate protection for the container, provided it maintains a predefined capacity of spent nuclear fuel.

### Description of the invention

The objective of the present invention is the design of an impact limiter formed by a pair of elements that are incorporated together at the ends of the container, which are capable of damping the acceleration forces that act during transport as a result of the impact loads that occur during a fall accident, with the particularity that this container is intended for storage, either in the ITS (Individualised Temporary Storage) facility of the plants or in the future CTS (Centralised Temporary Storage) facility, as well as for intermodal transport (by road, rail or sea), without the need to recondition the container by simply attaching these two impact limiters bolted to the outer cover and to the bottom of the container.

Each of these impact limiters is constituted by a stainless steel shell measuring between 6 and 8 mm, inside of which the polyurethane foam is arranged, and an aluminium honeycomb structure. A first vasiform area is delimited by a collar which surrounds the corresponding base of the container, above the cover or the bottom depending on the limiter placed at each end, which is annularly provided with a honeycomb structural protection that projects slightly from the edge of the container. A second protection area consisting of a polyurethane filling, which projects axially from the corresponding base of the container, above the cover or the bottom, is externally provided with a diameter that is slightly larger than that of the container, corresponding to that of the first protection area. The impact loads acting on the container are damped due to the energy absorbed during the crumpling of the energy absorption materials contained in the impact limiters.

An additional design parameter establishes that both impact limiters must remain attached to the container after a fall. For this purpose, it is provided that both limiters have an axial hole inside of which is disposed a disc parallel to and separated from the vasiform collar in contact with the cover or the bottom of the container by a series of separator tubes in respective holes existing in both parts, which also match up with the threaded holes existing in the cover and the bottom of the container by means of which the respective limiter is fixed by bolts that are threaded from the outside of the axial hole existing therein.

According to another feature of the invention, the protection area incorporating the polyurethane filling and located outside the container is axially provided with a projection having an outer diameter slightly smaller than that of the limiter in the area around the cover or bottom, and equal, or slightly larger, than the diameter of the container. This projection is provided with an inverted tapered inner opening, whose minor base extends into the hole housing the fixing system of the limiter on the cover or the bottom of the container. The purpose of this projection is to create several impact surfaces at different levels, such that if the container falls on the base or the cover, they considerably reduce the direct impact on the base or the cover thereof, even if they were to fall flat.

### Description of the figures

To supplement the description that is being made and in order to facilitate a better understanding of the characteristics of the invention, a series of figures has been attached to this specification, which represents the following by way of illustration and not limitation:

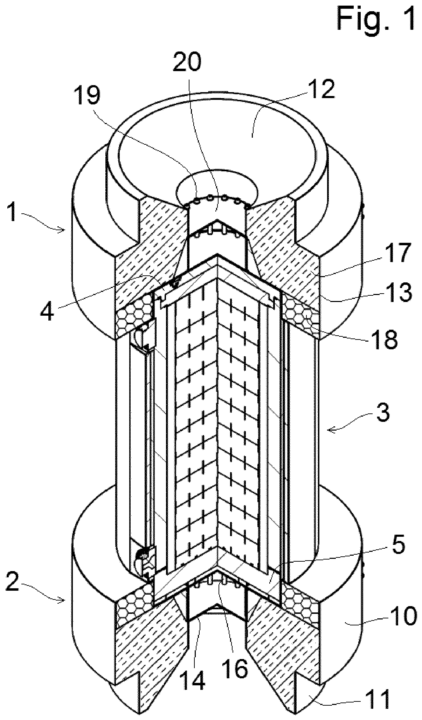

Figure 1 shows a general perspective view, with a partial section of a container (3) to which two impact limiters have been attached: (1) on the cover (4) and (2) the bottom (5) of the container.

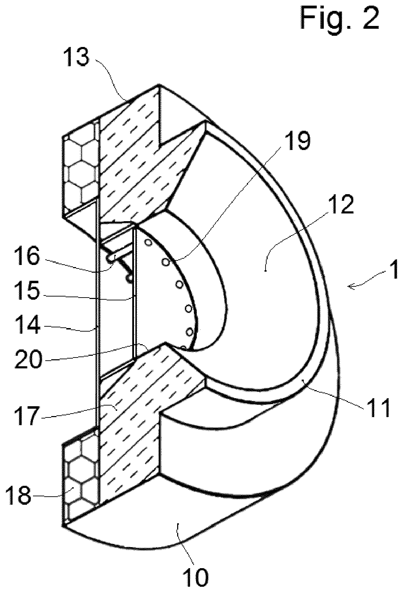

Figure 2 represents a perspective view of an impact limiter, with a diametric section to show its internal structure in detail.

### Preferred embodiment of the invention

As shown in the figures referred to above, the impact limiters for containers (3) for transporting spent nuclear fuel is formed by two round, cylindrical elements (1, 2) with a vasiform shape, placed at each end of the container (3) to dampen the impact forces caused by falls that could occur under normal transport conditions, or under hypothetical accident conditions. Impact limiters must ensure that the impact forces considered as the design limit of the container are not exceeded.

Each of the impact limiters consists of an outer shell (13) made of stainless steel, which is inferiorly delimited by a collar (14) and which surrounds the corresponding base of the container (3) above the cover (4) or the bottom (5). Inside, it includes a first honeycomb filling (18) that projects slightly from the edge of the container (3) and a second polyurethane filling (17) that projects axially from the corresponding base of the container (3), above the cover (4) or the bottom (5). Externally, the body of the limiter has a diameter slightly larger than that of the container (3).

The shell (13) is formed by outer collars made of austenitic stainless steel sheets, which constitute the packaging containing the polyurethane foam. The discs (15) and inner collar (14), which are in contact with the container, are made of a carbon steel sheet, and define the inner body of the limiter and house the system for affixing the same to the container. The space between the collar (14) and the disc (15) of the inner body is connected by round tubes (16) through which the bolts of the impact limiters (1, 2) pass on to the container (3).

The foam (17) located inside the shell is formed by a porous polymer used to dampen the impact forces caused by falls, absorbing the energy of the impact. On the other hand, the blocks of the aluminium honeycomb structure (18) are joined together to the outer shell by means of an adhesive and are arranged radially forming a concentric ring around the outer shell (13) of the container, immediately after the polyurethane foam (17). The internal structure of each block is constituted by biaxial hexagonal cells, with high energy absorption properties, which are also very light. Each of the blocks are oriented to ensure a radial crumpling direction. They are used to ensure that in the most severe falls, mainly with a horizontal or slightly inclined orientation (∼10° with respect to the horizontal plane, known as "slap-down"), the available volume of the impact limiters for absorbing energy is not exhausted and that the maximum acceleration measured in the centre of gravity of the container does not exceed approximately 60 g's in the events according to the conditions of the accident.

The protection area formed by a polyurethane filling (17) axially displays a projection (11), which is provided with an inverted tapered inner opening (12) whose minor base extends into the hole (20) housing the fixing system of the limiter on the cover (4) or the bottom (5) of the container; said axial projection (11) having an outer diameter slightly smaller than that of the limiter surrounding the cover (4) or the bottom (5), and equal to or slightly larger than that of the container (3). With this configuration, the behaviour of the impact limiters and the assembly thereof with the container against free falls from 9 m and punching from 1 m meets the requirements of transport regulations which have been validated through testing.

Both limiters (1, 2) have an axial hole (20) from the outside that reaches the inner collar (14). The disc (15), which is found inside this hole, is provided with a plurality of holes (19), which match up with the separator tubes (16) and other holes existing in the collar (14), through the which the respective limiter is attached by means of threaded bolts, from the outside of the axial hole (20) to the cover (4) or to the bottom (5) of the container (3). This form of assembly greatly facilitates this operation; while the flexibility of this coupling in the case of a strong impact on the side or on the edge allows the assembly to deform and prevents it from breaking and the limiter from falling off.

After sufficiently describing the nature of the invention as well as a preferred embodiment, it is stated for the appropriate purposes that the materials, shape, size and arrangement of the elements described herein may be modified, provided that this does not imply an alteration of the essential features of the invention claimed below:

## Claims

1. An impact limiter for containers for transporting spent nuclear fuel, of the type formed by respective round cylindrical elements (1, 2) placed at each end of a container (3), each of which includes:
- a first vasiform area delimited by a collar (14) which surrounds the corresponding base of the container (3) above the cover (4) or the bottom (4), and around which is provided with a honeycomb structural protection (18) that projects slightly from the edge of the container (3); and
- a second protection area consisting of a polyurethane filling (17) which projects axially from the corresponding base of the container (3) above the cover (4) or the bottom (5), which is externally provided with a diameter that is slightly larger than that of the container (3) corresponding to that of the first protection area, both areas being packaged by a rigid outer shell (13);
**characterised in that** it has an axial hole (20) of which is disposed a disc (15) parallel to and separated from the vasiform collar (14) by a series of separator tubes (16), in respective holes existing in both parts (14, 15), which match up with the threaded holes existing in the cover (4) and the bottom (5) of the container (3) by means of which the respective limiter is fixed by bolts that are threaded from the outside of the axial hole (20) of the limiter.

2. The limiter according to claim 1, **characterised in that** the protection area formed by a polyurethane filling (17) axially displays a projection (11), which is provided with an inverted tapered inner opening (12) whose minor base extends into the hole (20) housing the fixing system of the limiter on the cover (4) or the bottom (5) of the container; said axial projection (11) having an outer diameter slightly smaller than that of the limiter surrounding the cover (4) or the bottom (5), and equal to or slightly larger than that of the container (3).
